# EUROPÄISCHE PATENTSCHRIFT

(11) **EP 1 228 038 B1**
(45) Veröffentlichungstag und Bekanntmachung des Hinweises auf die Patenterteilung: **09.11.2005**
(21) Anmeldenummer: 00983098.5
(22) Anmeldetag: 31.10.2000
(51) Int. Cl.: C07C 267/00, C08K 5/29, C08G 18/09, C08G 18/02

(54) **CARBODIIMIDE MIT CARBOXYL- ODER CARBOXYLATGRUPPEN**
CARBODIIMIDES WITH CARBOXYL OR CARBOXYLATE GROUPS
CARBODIIMIDES COMPORTANT DES GROUPES CARBOXYLE ET CARBOXYLATE

(30) Priorität: 11.11.1999 DE 19954500
(43) Veröffentlichungstag der Anmeldung: 07.08.2002
(73) Patentinhaber: BASF Aktiengesellschaft, 67056 Ludwigshafen (DE)
(72) Erfinder: HÄBERLE, Karl, 67346 Speyer (DE); TREIBER, Reinhard, 69181 Leimen (DE); LACH, Christian, 67098 Bad Dürkheim (DE); LICHT, Ulrike, 68309 Mannheim (DE); MEYER-ROSCHER, Bernd, 67434 Neustadt (DE); WEYLAND, Peter, 67227 Frankenthal (DE)
(86) Internationale Anmeldenummer: PCT/EP2000/010684
(87) Internationale Veröffentlichungsnummer: WO 2001/034559

(56) Entgegenhaltungen:
- US-A- 5 576 398
- US-A- 5 597 942
- US-A- 5 859 166

## Beschreibung

Die Erfindung betrifft Verbindungen der allgemeinen Formel III

R¹-CO-NH-X-N=C=N-X-[-N=C=N-X-]ₙ-NH-CO-R²,

wobei
- x: für einen aliphatischen Kohlenwasserstoffrest mit 4 bis 12 Kohlenstoffatomen, einen cycloaliphatischen mit 6 bis 15 Kohlenstoffatomen oder einen araliphatischen Kohlenwasserstoffrest mit 7 bis 15 Kohlenstoffatomen steht,
- n: eine ganze Zahl von 0 bis 10 bedeutet und
- R¹, R²: von Aminocarbonsäuren oder Aminocarbonsäuresalzen (Komponente b) abgeleitete Reste sind, die sich durch Abstraktion eines an eine Aminogruppe gebundenen Wasserstoffatoms ableiten.

Organische Carbodiimide und deren Verwendung als Zusatzmittel zu wässrigen Polymerdispersionen sind bekannt. Weiterhin ist es bekannt, daß diese z.B. Polymerdispersionen zugesetzt werden, um das Molekulargewicht der Polymere zu erhöhen. Um die Carbodiimide auf einfache Weise homogen in der Dispersion verteilen zu können, werden sie mit hydrophilen Gruppen versehen.

Die EP-A-198 343 beschreibt Carbodiimide, die Sulfonatgruppen und gegebenfalls zusätzlich Polyethylenoxideinheiten tragen.

Aus der EP-A-686 626 sind weiterhin Carbodiimide bekannt, bei denen die Hydrophilie durch Ammoniumgruppen, die über Dialkylaminoalkohole eingeführt werden, durch Sulfonatgruppen, die über Salze von hydroxy-funktionellen Alkylsulfonsäuren eingeführt werden oder Polyethylenoxidreste bewirkt wird.

Die vorgenannten Produkte weisen jedoch folgende Nachteile auf:

Kationische Produkte wie durch Ammoniumgruppen hydrophilisierte Carbodiimide sind mit den üblicherweise verwendeten anionisch stabilisierten Dispersionen nicht verträglich.

Die mit Sulfonatgruppen hydrophilisierten Carbodiimide sind schwierig herstellbar. Aufgrund des sehr lipophoben Charakters der als Ausgangsverbindungen eingesetzten Salze gestaltet sich die Umsetzung mit den hydrophoben Isocyanatgruppen-aufweisenden Vorprodukten ausgesprochen schwierig, da die gegenseitige Löslichkeit sehr niedrig ist.

Die Dispersionen, die mit mit Polyalkylenoxidresten hydrophilisierten Carbodiimide ausgehärtet werden, besitzen eine unerwünschte permanente Hydrophilie.

Aus der nicht vorveröffentlichten DE-A-19821668 sind Carbodiimide auf der Basis von 1,3-Bis-(1-methyl-1-isocyanato-ethyl)benzol, bekannt, bei denen die Hydrophilisierung mit Aminosulfonsäuren bewirkt wird.

Aufgabe der Erfindung bestand in der Bereitstellung von Carbodiimiden, die mit den üblichen, anionisch stabilisierten Polymerdispersionen verträglich sind, einfach herzustellen sind und den damit gehärteten Dispersionsfilmen keine zusätzliche permanente Hydrophilie verleihen.

Die Verbindungen enthalten bevorzugt 200 bis 2000 mmol/kg, besonders bevorzugt 500 bis 1800 mmol/kg Carboxyl- oder Carboxylatgruppen, bezogen auf das Gewicht der Carbodiimide.

Der Anteil an Carbodiimid-Gruppen beträgt im allgemeinen 0,05 bis 8, bevorzugt 0,10 bis 5 mol/kg bezogen auf das Gewicht der Carbodiimide.

Die Carbodiimid-Einheiten in den erfindungsgemäßen Carbodiimiden werden im wesentlichen in der Weise gebildet, daß je 2 NCO-Gruppen der Komponente (a) unter Abspaltung von Kohlendioxid zu einem Carbodiimid zusammentreten.

Die Verbindungen enthalten bevorzugt mindestens eine Carbodiimidstruktur, bevorzugt mehr als eine Carbodiimidstruktur, besonders bevorzugt beträgt der mittlere Kondensationsgrad (Zahlenmittelwert), d.h. die mittlere Anzahl an Carbodiimidstrukturen in den erfindungsgemäßen Carbodiimiden 1 bis 20, insbesondere 2 bis 15.

Als Aufbaukomponente a) zu nennen sind Diisocyanate X(NCO)₂, wobei X für einen aliphatischen Kohlenwasserstoffrest mit 4 bis 12 Kohlenstoffatomen, einen cycloaliphatischen mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 1,3-Bis-(1-methyl-1-isocyanatoethyl)-benzol (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Die erfindungsgemäßen Carbodiimide enthalten Einheiten der allgemeinen Formel I

-X-N=C=N-X-[-N=C=N-X-]ₙ- I

in der
X die oben angegebene Bedeutung hat und
n eine ganze Zahl von 0 bis 10, bevorzugt 0,1,2,oder 3 bedeutet.

Besonders bevorzugt ist X von TMXDI oder Hexamethylendiisocyanat abgeleitet.

Geeignete Aminocarbonsäuren bzw. deren Salze (Komponente B) sind z.B. die in Fieser und Fieser, Organische Chemie, 2., verbesserte Auflage 1982 auf S. 1260 ff genannten alpha-Aminocarbonsäuren; bevorzugt: beta-Aminocarbonsäuren wie β-Alanin oder den Michael-Addukten von diprimären Diaminen an α,β-ungesättigte Carbonsäuren. Sofern die Aminocarbonsäuren in Form ihrer Salze eingesetzt werden, so kommen insbesondere Alkali-, Erdalkali- oder Ammoniumsalze in Betracht.

Solche Verbindungen gehorchen beispielsweise der Formel (II)

H₂N-R⁴-NH-R⁵-X (II)

in der
- R⁴ und R⁵ unabhängig voneinander für eine C₁- bis C₆-Alkandiyl-Einheit, bevorzugt Ethylen
und X für COOH oder eine Carboxylatgruppe steht.

Besonders bevorzugte Verbindungen der Formel (II) sind die N-(2-Aminoethyl)-2-aminoethancarbonsäure bzw. die entsprechenden Alkalisalze, wobei Na als Gegenion besonders bevorzugt ist.

Die Verbindungen können gegebenenfalls außer den durch die Komponenten (a) und (b) abgeleiteten Struktureinheiten noch weitere Struktureinheiten enthalten, die von den Komponenten (c) und (d) abgeleitet sind und hauptsächlich Urethan- oder Harnstoffeinheiten enthalten. Diese werden gebildet durch Reaktion der Isocyanatgruppen der Komponente (d) mit den gegenüber Isocyanat reaktiven Gruppen der Komponente (c) oder den Aminogruppen der Komponente (b) oder durch Reaktion der gegenüber Isocyanat reaktiven Gruppen der Komponente (c) mit den Isocyanatgruppen der Komponente (a). Durch die von den Komponenten (c) und (d) abgeleiteten Struktureinheiten werden also die Struktureinheiten der allgemeinen Formel I unterbrochen oder abgeschlossen oder sie befinden sich zwischen einer aus Komponente (a) und (b) gebildeten Struktureinheit. Die Komponenten (c) und (d) dienen somit hauptsächlich der Molekulargewichtsregelung, denn die Komponenten (c) und (d) wirken hauptsächlich als der Kettenverlängerer oder Kettenabbrecher.

Die Komponenten (c) tragen Gruppen, die mit Isocyanatgruppen in einer Additionsreaktion reagieren können. Beispielsweise können allgemein übliche Substanzen eingesetzt werden, die durch ihre Reaktion mit Isocyanaten Urethan- oder Harnstoffgruppen erzeugen. Beispielsweise können aromatische, aliphatische oder araliphatische Verbindungen mit 1 bis 20 Kohlenstoffatomen verwendet werden, die Hydroxyl- und/oder Aminogruppen als gegenüber Isocyanaten reaktive Gruppen enthalten. Bevorzugt werden als Verbindungen, die mindestens zwei gegenüber Isocyanaten reaktive Gruppen aufweisen, organische Verbindungen mit mindestens zwei Hydroxylgruppen, mit mindestens zwei Aminogruppen und/oder mindestens einer Hydroxylgruppe und mindestens einer Aminogruppe eingesetzt. Beispielsweise können verwendet werden: aromatische, araliphatische und/oder aliphatische Polyole mit 2 bis 20 Kohlenstoffatomen, bevorzugt solche mit primären Hydroxylgruppen. Z.B. können genannt werden: Ethandiol-1,2, Propandiol-1,3, Propandiol-1,2, Butandiol-1,4, -2,4, und/oder -2,3, Pentandiol-1,5, Hexandiol-1,6, Heptandiol-1,7, Oktandiol-1,8, Decandiol-1,10, Neopentylglykol, 2-Methylpropandiol-1,3, 2- und 3-Methylpentandiol-1,5, Polyethylenglykole, Polypropylenglykole, bevorzugt mit 2 Hydroxylgruppen, die Isomeren des Bis(hydroxy-methyl- oder -ethyl)benzols, Hydroxyalkylether von Dihydroxybenzolen, Trimethylolpropan, Glycerin, Pentaerythrit oder Zucker mit beispielsweise 4, 5 oder 6 Hydroxylgruppen.

Falls gegenüber Isocyanaten reaktive Verbindungen verwendet werden, die Ethylenoxideinheiten aufweisen, so sollte der Anteil an Ethylenoxideinheiten in den erfindungsgemäßen Carbodiimiden bevorzugt 1 bis 15 Gew.-%, bezogen auf das Gewicht der Carbodiimide, betragen. Bevorzugt werden keine solchen Verbindungen verwendet.

Als Amine sind Amine mit mindestens zwei primären und/oder sekundären Aminogruppen zu verwenden. Beispielhaft sind zu nennen: Amine des Molekulargewichtsbereiches von 32 bis 500 g/mol, vorzugsweise von 60 bis 300 g/mol, welche mindestens zwei primäre, mindestens zwei sekundäre oder eine primäre und eine sekundäre Aminogruppe enthalten. Beispiele hierfür sind Diamine wie Diaminoethan, Diaminopropan, Diaminobutan, Diaminopentan, Diaminohexan, Piperazin, 2,5-Dimethylpiperazin, 1-Amino-3,3,5-trimethyl-5-aminomethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin, oder 1,8-Diamino-4-aminomethyloktan.

Weiterhin können Amine verwendet werden, die sich von den genannten Aminen dadurch ableiten, daß eine oder mehrere primäre Aminogruppen durch weitere Substituenten wie z.B. Alkylgruppen zu sekundären Aminogruppen substituiert werden. Des weiteren können auch Verbindungen, die sowohl mindestens eine Hydroxylgruppe als auch mindestens eine Aminogruppe aufweisen, eingesetzt werden, beispielsweise Ethanolamin, Propanolamin, Isopropanolamin, Aminoethylethanolamin oder davon abgeleitete N-Alkylamine.

Bevorzugt werden lineare Alkohole, Amine oder Aminoalkohole, besonders bevorzugt solche mit einer geraden Zahl von C-Atomen verwendet. Weiterhin bevorzugt sind Alkohole, Amine oder Aminoalkohole mit cyclischen Strukturelementen.

Gegebenenfalls kann es zweckmäßig sein, zusätzlich zu den beschriebenen gegenüber Isocyanaten reaktiven Verbindungen mit mindestens zwei funktionellen Gruppen auch monofunktionelle Verbindungen einzusetzen, um das Molekulargewicht der erfindungsgemäßen Carbodiimide zu regulieren, insbesondere wenn die Diisocyanate in einem ersten Schritt zu den Carbodiimiden umgesetzt werden und anschließend die Reaktion der Isocyanatgruppen-enthaltenden Carbodiimide mit den gegenüber Isocyanaten reaktiven Verbindungen erfolgt. Als monofunktionelle gegenüber Isocyanaten reaktive Verbindungen können beispielsweise Amine und bevorzugt Alkohole verwendet werden. Geeignete Amine, z.B. primäre oder vorzugsweise sekundäre Amine, besitzen vorteilhafterweise 1 bis 12 C-Atome, vorzugsweise 2 bis 8 C-Atome. Beispielhaft genannt seien Methyl-, Ethyl-, Propyl-, Butyl-, Pentyl-, Hexyl-, 2-Ethylhexyl-, Octyl-, Decyl-, Diethyl-, Dipropyl-, Dibutyl-, Methylbutyl-, Ethylbutyl-und Ethylhexylamin sowie Cyclohexyl- und Benzylamin. Zur Absättigung der Isocyanatgruppen finden jedoch vorzugsweise Alkohole, z.B. primäre oder sekundäre Alkohole mit 1 bis 18 C-Atomen, vorzugsweise 2 bis 8 C-Atomen Verwendung. Als primäre oder sekundäre Alkohole seien beispielhaft genannt: Methanol, Ethanol, n-Propanol, Isopropanol, n-Butanol, sekundär-Butanol, n-Pentanol, technische Pentanolmischungen, n-Hexanol, technische Hexanolgemische, 2-Ethylhexanol, Octanol, 2-Ethyloctanol, Dekanol und Dodekanol sowie Cyclohexanol und Benzylalkohol.

Bevorzugt wird die Komponente (b) mit monofunktionellen Verbindungen, besonders bevorzugt Monoaminen eingesetzt.

Im allgemeinen beträgt das Molekulargewicht der Komponenten (c) weniger als 400, insbesondere sind die erfindungsgemäßen Carbodiimide frei von Einheiten, die sich von Makropolyolen wie Polyetherpolyolen oder Polyesterpolyolen mit einem Molekulargewicht von mehr als 400 ableiten.

Als Komponente (d) kommen hauptsächlich aromatische Isocyanate in Betracht, z.B. 1,4-Diisocyanatobenzol, 2,4-Diisocyanatotoluol, 2,6-Diisocyanatotoluol, 4,4'-Diisocyanato-diphenylmethan oder 2,4'-Diisocyanato-diphenylmethan.

Im allgemeinen beträgt der Anteil der Komponenten (c) und (d), bezogen auf den Anteil aller Komponenten (a) bis (d), die zur Herstellung der Verbindungen V eingesetzt werden, nicht mehr als 0 bis 40, bevorzugt 0 bis 30 Gew.-%.

Die Herstellung der erfindungsgemäßen Carbodiimide erfolgt im wesentlichen durch zwei Umsetzungsschritte, indem man
I. Carbodiimide mit endständigen Isocyanatgruppen herstellt, indem man einen Teil der Isocyanatgruppen der Komponente (a) carbodimidisiert und
II. die gemäß Schritt I hergestellten Verbindungen mit endständigen Isocyanatgruppen mit der Komponente (b) und gegebenfalls den Komponenten (c) und (d) umsetzt.

In Schritt I werden durch allgemein bekannte Umsetzung der Isocyanatgruppen miteinander unter Abspaltung von Kohlendioxid in Gegenwart von üblichen Katalysatoren, die für diese Umsetzung bekannt sind, Carbodiimidstrukturen erzeugt, In Schritt II werden Isocyanatgruppen mit gegenüber Isocyanaten reaktiven Verbindungen zur Herstellung von Urethan- und/oder Harnstoffstrukturen in bekannter Weise umgesetzt.

Das molare Verhältnis der NCO-Gruppen des Isocyanatgruppen-aufweisenden Carbodiimides zu der Summe aus den gegenüber Isocyanaten reaktiven Gruppen der Komponente (c) und den Aminogruppen der Komponente (a) beträgt üblicherweise 10:1 bis 0,2:1, bevorzugt 5:1 bis 0,5:1.

Alternativ können die erfindungsgemäßen Carbodiimide dadurch erhalten werden, daß man Komponente (a) zunächst mit den Komponenten (b) und gegebenfalls (c) umsetzt, wobei das Verhältnis von eingesetzten Isocyanatgruppen zu der Summe aus den gegenüber Isocyanaten reaktiven Gruppen der Komponente (c) und den Aminogruppen der Komponente (b) mindestens 2 : 1 beträgt, und anschließend das Isocyanatgruppen aufweisende Reaktionsprodukt in Gegenwart von Katalysatoren unter Kohlendioxidfreisetzung zu Carbodiimiden umsetzt. Nach dieser Verfahrensvariante werden zunächst bis zu 50 Gew.-%, vorzugsweise bis zu 23 Gew.-% der Isocyanatgruppen der Komponete (a) mit den gegenüber Isocyanaten reaktiven Verbindungen umgesetzt und danach die freien Isocyanatgruppen in Gegenwart von Katalysatoren unter Kohlendioxidfreisetzung ganz oder teilweise zu Carbodiimidgruppen umgesetzt.

Die Umsetzungen können bevorzugt in Gegenwart eines Lösungsmittels und gegebenenfalls einem löslichkeitsvermittelnden Hilfslösungsmittel, besonders bevorzugt in Gegenwart eines Lösungsmittels und einem löslichkeitsvermittelnden Hilfslösungsmittel, durchgeführt werden. Als Lösungsmittel ist bevorzugt Wasser geeignet. Als löslichkeitsvermittelnde Hilflösemittel sind vor allem solche Verbindungen geeignet, die das Reaktionsprodukt der Umsetzung gemäß Schritt I gut lösen und außerdem mit Wasser mischbar sind, beispielsweise Methanol, Ethanol, n- und/oder iso-Propanol, Propanon, Tetrahydrofuran, Dioxan, N-Methylpyrrolidon, Dimethylformamid, Dimethylacetamid und/oder Propylencarbonat. Bevorzugt werden Hilflösemittel mit einem Siedepunkt bei 1013 mbar von <100 °C verwendet. Das Gewichtsverhältnis von Lösungsmittel zu Hilfslösungsmittel beträgt üblicherweise 50 : 1 bis 0,02 : 1.

Die Reaktion des Wassers und auch der alkoholischen Hilfslösemittel mit den Isocyanatgruppen ist verglichen mit der Aminogruppe der Komponente (b) relativ langsam. Freie Aminocarbonsäuren sind Betaine und vorzugsweise in Wasser löslich. Nach einer Protonierung des Stickstoffes reagieren sie nicht mit den Isocyanatgruppen, so daß die Aminogruppe bevorzugt mit einer Hilfsbase, beispielsweise (Erd)Alkalihydroxide oder - carbonate, tertiäre Amine, quartäre Ammoniumhydroxide, bevorzugt Alkalihydroxide oder tertiäre Amine, besonders bevorzugt NaOH, KOH, Triethylamin oder Dimethylethanolamin freisetzt werden kann.

Der Verfahrensschritt, in dem die Carbodiimidgruppen gebildet werden, kann bei erhöhten Temperaturen, z.B. bei Temperaturen von 50 bis 200°C, vorzugsweise von 150 bis 185°C, zweckmäßigerweise in Gegenwart von Katalysatoren durchgeführt werden. Hierfür geeignete Verfahren werden beispielsweise beschrieben in der GB-A-1 083 410, der DE-B 1 130 594 (GB-A-851 936) und der DE-A-11 56 401 (US-A-3 502 722). Als Katalysatoren vorzüglich bewährt haben sich z.B. Phosphorverbindungen, die vorzugsweise ausgewählt werden aus der Gruppe der Phospholene, Phospholenoxide, Phospholidine und Phospholinoxide. Wenn die Reaktionsmischung den gewünschten Gehalt an NCO-Gruppen besitzt, wird die Polycarbodiimidbildung üblicherweise beendet. Hierzu können die Katalysatoren unter vermindertem Druck abdestilliert oder durch Zusatz eines Desaktivators, wie z.B. Phosphortrichlorid, desaktiviert werden. Die Polycarbodiimidherstellung kann ferner in Abwesenheit oder Gegenwart von unter den Reaktionsbedingungen inerten Lösungsmitteln durchgeführt werden.

Die Temperatur bei dem Schritt, in dem vorwiegend Urethan- und Harnstoffgruppen gebildet werden, beträgt üblicherweise 10 bis 100°C.

Wird Komponente (a) zuerst zu einem Isocyanatgruppen aufweisenden Carbodiimid (Schritt I) und anschließend zur Verbindung (V) umgesetzt, so weist das in Schritt I gebildete Zwischenprodukt bevorzugt einen NCO-Gehalt von 1 bis 18 Gew. % auf.

Durch geeignete Wahl der Reaktionsbedingungen wie z.B. der Reaktionstemperatur, der Katalysatorart und der Katalysatormenge sowie der Reaktionszeit kann der Fachmann in der üblichen Weise den Kondensationsgrad einstellen. Der Verlauf der Reaktion kann am einfachsten durch Bestimmung des NCO-Gehaltes verfolgt werden. Auch andere Parameter wie z.B. Viskositätsanstieg, Farbvertiefung oder CO₂-Entwicklung kann man für die Verfolgung des Ablaufs und die Steuerung der Reaktion heranziehen.

Die erfindungsgemäße Verbindung (III) eignet sich vor allem zur Molekulargewichtserhöhung von Polymeren (P), die in Form einer wässrigen Dispersion vorliegen.

Als Polymer (P), kommen praktisch alle filmbildenden Polymerisate in Betracht.

Bevorzugt tragen die Polymere (P) Carboxylgruppen, im allgemeinen in Mengen von 0,01 bis 2 mmol/kg.

Mischungen aus Verbindungen (III) und wässrigen Dispersionen enthaltend Polymer (P) enthalten Verbindungen (V) und Polymer (P) bevorzugt im Verhältnis 0,005 : 1 bis 1 : 1.

Die Vermischung ist unkritisch und kann beispielsweise so vorgenommen werden, daß man Verbindung (III) in die wässrige Dispersionen enthaltend Polymer (P) einrührt. Die Vermischung kann zu einem beliebigen Zeitpunkt vor deren Anwendung erfolgen.

Geeignete Polymere (P) sind beispielsweise wasserdispergierbare Polyurethane (Polymere PII). Derartige Polyurethane und die diese enthaltenden Dispersionen sind allgemein bekannt (vgl. Ullmann's Encyclopedia of Industrial Chemistry, 5^{th} Edition, Volume A 21, Seiten 677f.

Bevorzugt sind derartige Dispersionen aufgebaut aus
IIa)Diisocyanaten mit 4 bis 30 C-Atomen,
IIb) Diolen, von denen
   IIb1) 10 bis 100 mol-%, bezogen auf die Gesamtmenge der Diole (IIb), ein Molekulargewicht von 500 bis 5000 aufweisen, und
   IIb2) 0 bis 90 mol-%, bezogen auf die Gesamtmenge der Diole (IIb), ein Molekulargewicht von 60 bis 500 g/mol aufweisen,
IIc) von den Monomeren (IIa) und (IIb) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
IId) gegebenenfalls weiteren von den Monomeren (IIa) bis (IIc) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
IIe) gegebenenfalls von den Monomeren (IIa) bis (IId) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Als Monomere (IIa) kommen die üblicherweise in der Polyurethanchemie eingesetzten aliphatischen oder aromatischen Diisocyanate in Betracht. Bevorzugt sind die Monomere (IIa) oder deren Mischungen, die auch als Monomere (IIa) in der DE-A-19521500 erwähnt sind.

Als Monomere (IIb) und (IId) kommen bevorzugt die in der DE-A-19521500 als Monomere (IIb) und (IId) genannten in Betracht.

Monomere IIb1 sind beispielsweise Polyester- oder Polyetherdiole.

Bei den Monomeren IIb2 handelt es sich beispielsweise um aliphatische Diole mit 2 bis 12 C-Atomen, z.B. 1,4-Butandiol oder 1,6-Hexandiol.

Als Monomere (IId) sind beispielsweise aliphatische Amine mit 2 bis 12 C-Atomen und 2 bis 4 Gruppen, ausgewählt aus der Gruppe der primären oder sekundären Aminogruppen, geeignet. Beispiele sind Ethylendiamin, Isophorondiamin oder Diethylentriamin.

Um die Wasserdispergierbarkeit der Polyurethane zu erreichen, sind die Polyurethane neben den Komponenten (IIa), (IIb) und (IId) aus von den Komponenten (IIa), (IIb) und (IId) verschiedenen Monomere (IIc), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Bevorzugte Monomere (IIc) sind ebenfalls die in der DE-A-19521500 als Monomere (IIc) bezeichneten.

Der Anteil der Komponenten mit (potentiell) hydrophilen Gruppen an der Gesamtmenge der Komponenten (IIa), (IIb), (IIc), (IId) und (IIe) wird im allgemeinen so bemessen, daß die Molmenge der (potentiell) hydrophilen Gruppen, bezogen auf die Gewichtsmenge aller Monomere (a) bis (e), 80 bis 1200, bevorzugt 140 bis 1000 und besonders bevorzugt 200 bis 800 mmol/kg beträgt.

Bei den (potentiell) hydrophilen Gruppen kann es sich um nichtionische, z.B. Polyethylenoxidgruppen oder bevorzugt um (potentiell) ionische hydrophile Gruppen, z.B. Carboxylat- oder Sulfonat-Gruppen handeln. Bevorzugt wird ohne wirksame Mengen an nichtionischen Gruppen gearbeitet

Der Gehalt an nichtionischen hydrophilen Gruppen, falls solche eingebaut werden, beträgt im allgemeinen bis 5, bevorzugt bis 3, besonders bevorzugt bis 1 Gew.-%, bezogen auf die Gewichtsmenge aller Monomere (IIa) bis (IIe).

Monomere (IIe), die gegebenenfalls mitverwendet werden, sind Monoisocyanate, Monoalkohole und mono-primäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie Carbonylgruppen und dienen zur Einführung von funktionellen Gruppen in das Polyurethan, die die Dispergierung bzw. die Vernetzung oder weitere polymeranaloge Umsetzung des Polyurethans ermöglichen.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (IIa) bis (IIe) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Weiterhin wird der Anteil der Monomere (a) bevorzugt so gewählt, daß der Anteil der Monomere (IIa) an den Monomeren (IIa) bis (IIe) 20 bis 70 Gew.-% beträgt.

Die eingesetzten Monomere (IIa) bis (IIe) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die verschiedenen Herstellmethoden der Polymere PII sind allgemein bekannt und beispielsweise in der DE-A-19807754 näher beschrieben.

Weiterhin kann es sich bei den Polymeren (P) um übliche Emulsonspolymerisate (Polymere PIII) handeln.

Diese sind im allgemeinen aufgebaut aus
IIIa)30 bis 99,9 Gew.-% Hauptmonomere ausgewählt aus C₁- bis C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
IIIb)0 bis 20, bevorzugt 0,01 bis 20 Gew.-% einer Carbonsäure mit einer olefinischen Doppelbindung und
IIIc)0 bis 20 Gew.-% von (IIIa) und (IIIb) verschiedenen radikalisch polymerisierbaren Monomeren

Als Monomere (IIIa) zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, alpha- und p-Methylstyrol, alpha-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren, und Chloropren, sowie Ethylen, Propylen und Isobutylen genannt.

Die Hauptmonomeren (IIIa) werden auch vorzugsweise im Gemisch eingesetzt.

Vinylaromatische Verbindungen wie Styrol werden z.B. häufig im Gemisch mit C₁-C₂₀-Alkyl(meth)acrylaten, insbesondere mit C₁-C₈-Alkyl(meth)acrylaten, oder nicht aromatischen Kohlenwasserstoffen wie Isopren oder vorzugsweise Butadien eingesetzt.

Als Monomere (IIIb) kommen vorzugsweise (Meth)acrylsäure oder Maleinsäure in Betracht.

Als Monomere (IIIc) kommen z.B. in Betracht: Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl-(meth)acrylat, Phenylpropyl-(meth)acrylat oder Acrylsäureester von heterocyclischen Alkoholen wie Furfuryl(meth)acrylat genannt.

Darüber hinaus kommen als Monomer (IIIc) noch Monomere mit Amino-oder Amidgruppen wie (Meth)acrylamid, sowie deren am Stickstoff mit C₁-C₄-Alkyl substituierten Derivate, in Betracht.

von Bedeutung als Monomere (IIIc) sind insbesondere hydroxyfunktionelle Monomere, z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind (Meth)acrylsäure-C₂-C₈- hydroxyalkylester, wie n-Hydroxyethyl-, n-Hydroxypropyl- oder n-Hydroxybutyl(meth)acrylat.

Die Herstellung des Polymers (PIII) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenolen, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak, zu Carbonsäuregruppen enthaltenden Copolymerisaten in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan, sie können z.B. in Mengen von 0 bis 0,5 Gew.-%, bezogen auf das Copolymerisat, zusätzlich eingesetzt werden.

Die Art und Menge der Comonomeren wird vorzugsweise so gewählt, daß das erhaltene Copolymerisat eine Glasübergangstemperatur von -60 bis +140°C, vorzugsweise -60 und +100°C aufweist. Die Glasübergangstemperatur des Copolymerisats wird durch Differentialthermoanalyse oder Differential Scanning Calorimetrie nach ASTM 3418/82, bestimmt.

Das zahlenmittlere Molekulargewicht Mₙ beträgt vorzugsweise 10³ bis 5·10⁶, besonders bevorzugt 10⁵ bis 2·10⁶ g/mol (bestimmt durch Gelpermeationschromatographie mit Polystyrol als Standard).

Weiterhin kann es sich bei den Polymeren (P) um (Polymere PIV) um einen wasserdispergierbaren Polyester, der Carboxylgruppen trägt, handeln.

Die wasserdispergierbaren Polyester, die Carboxylgruppen tragen, (Polymer IV), sind beispielsweise aus Encyclopedia of polymer science and engineering, John Wiley & Sons, second edition, volume 12, Seiten 300 bis 313 bekannt.

Die wässrigen Dispersionen, die das Polymer (P) enthalten, weisen üblicherweise einen Feststoffgehalt von 10 bis 70 Gew.-% auf.

Die erfindungsgemäßen Mischungen enthaltend Verbindung (III) und Polymer (P) können handelsübliche Hilfs- und Zusatzstoffe wie Netzmittel, Entschäumer, Mattierungsmittel, Emulgatoren, Verdikkungsmittel und Thixotropiermittel, Farbmittel wie Farbstoffe und Pigmente enthalten.

Sie eignen sich beispielsweise zum Verkleben oder Beschichten unterschiedlicher Substrate wie Holz, Metall, Kunststoffen, Papier, Leder oder Textil, für die Imprägnierung von Textilien sowie für die Herstellung von Formkörpern und Druckfarben.

Die Verarbeitung der erfindungsgemäßen Polyurethandispersionen kann dabei nach den in der Klebstoff, Leder- oder Lackindustrie allgemein üblichen Verfahren erfolgen, also indem man die Dispersionen auf das Substrat sprüht, walzt oder rakelt und anschließend trocknet.

Für den Fall der Verarbeitung als Klebstoff werden die beschichteten Werkstücke entweder vor dem Trocknen des Dispersionsfilms oder nach dem Trocknen mit einem anderen Werkstück bevorzugt unter Anwendung von Druck zusammengefügt.

Besonders feste Klebstoffverbunde erhält man, wenn man Werkstücke, die mit einem getrockneten Klebstofffilm versehen sind, unmittelbar vor, während oder nach dem Zusammenfügen auf eine Temperatur von ca. 50 bis 100°C erwärmt.

Die nach diesen Methoden hergestellten Klebstoffverbunde zeichnen sich insbesondere dadurch aus, daß sie lagerbeständig sind und sich mit ihnen Verklebungen mit einer hohen Wärmestandfestigkeit herstellen lassen.

### Experimenteller Teil

### 2. Herstellung eines hydrophilen Polycarbodiimids

In eine Lösung aus 8 g NaOH-Plätzchen und 17,8 g beta-Alanin in 80 g Wasser und 150 g Aceton wurden unter Rühren 110 g eines NCOterminierten Carbodiimids aus 1,3-Bis-(1-methyl-1-isocyanatoethyl)-benzol TMXDI mit einem NCO-Gehalt von 7,8 Gew.% gegeben. Nach 120 min Rühren bei 50°C wurde das Aceton im Vakuum abgezogen und mit 170 g Wasser verdünnt. Man erhält eine kolloidale, wässrige Lösung eines Carbodiimids mit 34% Festgehalt und einem LD-Wert von 100.

### Anwendungsbeispiel 1: Verwendung als Klebstoff

Zunächst wurde eine Polyurethandispersion hergestellt. 594 g eines Polyesterdiols aus Isophthalsäure, Adipinsäure und Hexandiol (OHZ=56,6) und 40,2 g Dimethylolpropionsäure wurden in 200 g Aceton mit 0,5 g Dibutylzinndilaurat DBTL versetzt und bei 60°C 60,9 g Toluylendiisocyanat TDI und 58,9 g Hexamethylendiisocyanat HDI zudosiert. Nach 6 h 40 min bei 65-68°C wurde mit 700 g Aceton verdünnt und auf 50°C abgekühlt. Der NCO-Gehalt beträgt jetzt 0,54 %. Es wurde mit 9,6 g 50%iger NaOH neutralisiert und mit 40 g VE-Wasser verdünnt. Nach 10 min wurde mit 950 g VE-Wasser dispergiert. Das Aceton wurde im Vakuum bei 100 mbar und 43°C abdestilliert, der Feststoffgehalt auf ca. 40% eingestellt.
FG: 39.7% LD: 94 pH: 6.4 Visk.: 79 mPas K-Wert: 47

### Anwendungsbeispiel 1.1:

150 g der PUR-Dispersion aus Anwendungsbeispiel 1 wurden mit 22.2 g der CDI-Lösung aus 1. gemischt.

### Anwendungsbeispiel 1.2:

150 g der PUR-Dispersion aus Anwendungsbeispiel 1 werden mit 11,1 g der CDI-Lösung gemischt.

### Anwendungsbeispiel 1.3:

150 g der PUR-Dispersion aus Beispiel 1 werden ohne CDI-Lösung eingesetzt.

### 1.4 Anwendungstechnische Prüfung

Die Mischungen wurden einer HF/PVC-Verklebung unterworfen und die Wärmestandfestigkeit bestimmt

### 1.4.1 Vorbereitung der Prüfkörper

Die Prüfungen wurden nach folgender Prüfvorschrift durchgeführt
- Substrat:: Hartfaserplatte/PVC-Folie, Typ: Benecke 577/E28
- Abmessung:: 200 x 200 mm
- Verklebungsfläche:: 200 x 170 mm (in 5 Prüfstreifen zu 30 mm unterteilt)
- Auftrag:: 2 mm Drahtrakel auf Hartfaserplatte in Längsrichtung
- Trocknung:: 3 min bei 60°C
- Verklebungsweise:: Warmverpressung bei 80 °C nur PVC-Seite
- Preßdruck:: 0,1 N/mm²
- Preßdauer:: 30 s
- Probenlagerung:: 1 Tag bei RT
- Prüfbelastung:: 300 g pro 30 mm breitem Prüfstreifen
- Abschälwinkel:: 180°
- Anzahl der Proben:: 1 Platte sind 5 Proben

### 1.4.2 Belastungsprüfung und Auswertung

Die Prüfungen wurden nach folgender Prüfvorschrift durchgeführt:
Nach dem Kleberauftrag, der Trocknung und der Pressung werden aus der so hergestellten Fläche 30 mm breite Streifen mit 10 mm Zwischenraum geschnitten. Dabei wird lediglich die Folie durchtrennt, die Hartfaserplatte bleibt unbeschädigt. Die 10 mm breiten Zwischenstreifen werden entfernt und an die 30 mm breiten Prüfstreifen je 300 g Gewicht angeklemmt.

Die Prüfung beginnt bei 40°C. Nach jeweils 30 Minuten wird die Temperatur um 10°C erhöht. In der Aufheizphase, die 15 Minuten beträgt, sind die Prüfstreifen nicht belastet.
Beurteilung des Bruchbildes:
K= Trennung in der Klebeschicht ohne Ablösung von einem Werkstoff (Kohäsionsbruch)

### 1.4.3 Ergebnis:

Beurteilt wurde die Temperatur, gemessen in °C, bei der die Verklebung noch hält.

Bei mehr als 10 mm Abschälung ist die Prüfung zu Ende.

Die Prüfergebnisse sind in Tabelle 1 zusammengefaßt.

**Tabelle 1**

| Versuch | WSF |
|---|---|
| Beispiel 1.1 | 2x 110°C, 3x 120°C |
| Beispiel 1.2 | 1x 110°C , 4x 120°C |
| Beispiel 1.2 | 6x 90°C |

### Anwendungsbeispiel 2

### Herstellung einer Polyacrylat-Dispersion

In einem 2-l-Reaktor wurden zu 200 g deionisiertem Wasser bei 85°C 6 g einer Lösung von 2 g Natriumpersulfat in 68 g Wasser (Zulauf 2) und 15,5 g einer Emulsion von 370 g Styrol, 400 g n-Butylacrylat, 21 g Acrylsäure, 16 g einer 50% wässrigen Lösung von Acrylamid, 32 g einer 20% wässrigen Lösung eines ethoxylierten (n = 18) gesättigten linearen C₁₆C₁₈-Fettalkohols und 12 g einer 45% wässrigen Lösung des Natriumsalzes der Disulfonsäure eines dodecylsubstituierten Diphenylethers in 470 g Wasser (Zulauf 1) zugegeben und 30 Minuten anpolymerisiert. Daraufhin wurden die Restmengen der Zuläufe 1 und 2 über 2 Stunden bzw. 2 Stunden 15 Minuten zugegeben. Es wurde 2 Stunden bei 85°C nachpolymerisiert und anschließend mit konzentrierter Ammoniaklösung auf pH=8 neutralisiert
FG: 49 % pH: 8,0 LD: 23 Visk.: 1720 mPas

### Anwendungsbeispiel 2.1:

150 g der Acrylat-Dispersion aus Anwendungsbeispiel 2 wurden auf 25 % Feststoffgehalt verdünnt und mit 2,5 g der CDI-Lösung gemischt.

### Anwendungsbeispiel 2.2:

150 g der Acrylat-Dispersion aus Anwendungsbeispiel 2 wurden auf 25 % Feststoffgehalt verdünnt und mit 5 g der CDI-Lösung gemischt.

### Anwendungsbeispiel 2.3 (Vergleich):

150 g der Acrylat-Dispersion aus Beispiel 2 wurden auf 25 % Feststoffgehalt verdünnt und ohne CDI-Lösung eingesetzt.

Aus den Dispersionen der Anwendungsbeispiele 2.1. bis 2.3. wurden Filme von 1 mm Stärke gegossen und 14 Tage bei Raumtemperatur getrocknet.

### 2.4 Prüfung

Die Filme wurden einem Zugversuch nach DIN 53504 unterworfen.

Die Ergebnisse sind in Tabelle 2 zusammengefaßt

**Tabelle 2**

| Anwendungsbeispiel | Reißspannung (MPa) | Reißdehnung (%) |
|---|---|---|
| 2.1. | 7,2 | 430 |
| 2.2. | 8,4 | 410 |
| 2.3. (Vergleich) | 6,2 | 320 |

Der Anstieg von Reißspannung und -dehnung zeigt eine Vernetzung an.

## Patentansprüche

1. Verbindungen der allgemeinen Formel III
R¹-CO-NH-X-N=C=N-X-[-N=C=N-X-]ₙ-NH-CO-R²,
wobei
x für einen aliphatischen Kohlenwasserstoffrest mit 4 bis 12 Kohlenstoffatomen, einen cycloaliphatischen mit 6 bis 15 Kohlenstoffatomen oder einen araliphatischen Kohlenwasserstoffrest mit 7 bis 15 Kohlenstoffatomen steht,
n eine ganze Zahl von 0 bis 10 bedeutet und
R¹, R² von Aminocarbonsäuren oder Aminocarbonsäuresalzen (Komponente b) abgeleitete Reste sind, die sich durch Abstraktion eines an eine Aminogruppe gebundenen Wasserstoffatoms ableiten.

2. Verbindungen nach Anspruch 1, enthaltend 200 bis 2000 mmol/kg Carboxyl- oder Carboxylatgruppen, bezogen auf das Gewicht der Verbindungen.

3. Verbindungen nach Anspruch 1 oder 2, **dadurch gekennzeichnet, dass** sie weitere Verbindungen enthalten, die Gruppen tragen, die mit Isocyanatgruppen in einer Additionsreaktion reagieren können (Komponente c)).

4. Verbindungen nach einem der Ansprüche 1 bis 3, **dadurch gekennzeichnet, dass** sie sonstige Isocyanate (Komponente d)) enthalten.

5. Verbindungen nach Anspruch 3, wobei es sich bei der Komponente (c) um aromatische, aliphatische oder gegebenfalls Polyalkylenoxidgruppen tragende araliphatische Verbindungen mit 1 bis 20 Kohlenstoffatomen (wobei bei der genannten Zahl der Kohlenstoffatome die der Polyalkylenoxidgruppen nicht mitgezählt werden) und mindestens einer funktionellen Gruppe, ausgewählt aus der Gruppe der sekundären Aminogruppe, der primärem Aminogruppe oder der alkoholischen Hydroxylgruppe, handelt.

6. Mischungen aus einer Verbindung (III) gemäß einem der Ansprüche 1 bis 5 und einer wässrigen Dispersion enthaltend ein Polymer (P).

7. Mischungen gemäß Anspruch 6, wobei das Polymer (P) Carboxylgruppen trägt.

8. Mischungen nach Anspruch 6, wobei es sich bei Polymer (P) um ein Polyurethan (PII), aufgebaut aus
IIa)Diisocyanaten mit 4 bis 30 C-Atomen,
IIb) Diolen, von denen
IIb1)10 bis 100 mol-%, bezogen auf die Gesamtmenge der Diole (IIb), ein Molekulargewicht von 500 bis 5000 aufweisen, und
IIb2)0 bis 90 mol-%, bezogen auf die Gesamtmenge der Diole (IIb), ein Molekulargewicht von 60 bis 500 g/mol aufweisen,
IIc) von den Monomeren (IIa) und (IIb) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
IId) gegebenenfalls weiteren von den Monomeren (IIa) bis (IIc) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
IIe) gegebenenfalls von den Monomeren (IIa) bis (IId) verschiedenen einwertigen Verbindungen mit einer reaktiven Gruppe, bei der es sich um eine alkoholische Hydroxylgruppe, eine primäre oder sekundäre Aminogruppen oder eine Isocyanatgruppe handelt.

9. Mischungen nach Anspruch 6, wobei es sich bei Polymer (P) um ein Polymer (PIII), aufgebaut aus
IIIa)30 bis 99,9 Gew.-% Hauptmonomere ausgewählt aus C₁- bis C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
IIIb)0 bis 20 Gew.-% einer Carbonsäure mit einer olefinischen Doppelbindung und
IIIc)0 bis 20 Gew.-% von (IIIa) und (IIIb) verschiedenen radikalisch polymerisierbaren Monomeren

10. Gegenstände, die mit einer Mischung gemäß den Ansprüchen 6 bis 8 verklebt oder beschichtet sind, sowie Textilien, die mit dieser Mischung imprägniert sind.

## Claims

1. A compound of the general formula III
R¹-CO-NH-X-N=C=N-X-[-N=C=N-X-]ₙ-NH-CO-R²,
where
X is an aliphatic hydrocarbon radical having 4 to 12 carbon atoms, a cycloaliphatic hydrocarbon radical having 6 to 15 carbon atoms, or an araliphatic hydrocarbon radical having 7 to 15 carbon atoms,
n is an integer from 0 to 10, and
R¹ and R² are radicals derived from amino carboxylic acids or amino carboxylic salts (component b) by abstraction of a hydrogen atom attached to an amino group.

2. A compound (V) as claimed in claim 1, comprising from 200 to 2000 mmol/kg of carboxyl or carboxylate groups, based on the weight of the compound.

3. A compound as claimed in claim 1 or 2, comprising further compounds which carry groups able to react with isocyanate groups in an addition reaction (component c)).

4. A compound as claimed in any one of claims 1 to 3, comprising other isocyanates (component d)).

5. A compound as claimed in claim 3, wherein component (c) comprises aromatic compounds, aliphatic compounds or araliphatic compounds, the araliphatic compounds carrying polyalkylene oxide groups if appropriate, said compounds having 1 to 20 carbon atoms (not including the carbon atoms of the polyalkylene oxide groups) and having at least one functional group selected from the group consisting of secondary amino group, primary amino group and alcoholic hydroxyl group.

6. A mixture of a compound (III) as claimed in any of claims 1 to 5 and an aqueous dispersion comprising a polymer (P).

7. A mixture as claimed in claim 6, wherein the polymer (P) carries carboxyl groups.

8. A mixture as claimed in claim 6, wherein polymer (P) comprises a polyurethane (PII) synthesized from
IIa)diisocyanates having 4 to 30 carbon atoms,
IIb)diols of which
IIb1)from 10 to 100 mol%, based on the total amount of the diols (IIb), have a molecular weight of from 500 to 5000, and
IIb2)from 0 to 90 mol%, based on the total amount of the diols (IIb), have a molecular weight of from 60 to 500 g/mol,
IIc)monomers different than the monomers (IIa) and (IIb) and containing at least one isocyanate group or at least one isocyanate-reactive group, and further carrying at least one hydrophilic group or potentially hydrophilic group, thereby rendering the polyurethanes dispersible in water,
IId)if appropriate, further polyfunctional compounds different than the monomers (IIa) to (IIc) and having reactive groups which comprise alcoholic hydroxyl groups, primary or secondary amino groups or isocyanate groups, and
IIe)if appropriate, monofunctional compounds different than the monomers (IIa) to (IId) and having a reactive group which comprises an alcoholic hydroxyl group, a primary or secondary amino group or an isocyanate group.

9. A mixture as claimed in claim 6, wherein polymer (P) comprises a polymer (PIII) synthesized from
IIIa) from 30 to 99.9% by weight of principal monomers selected from C₁ to C₂₀ alkyl(meth)acrylates, vinyl esters of carboxylic acids comprising up to 20 carbon atoms, vinylaromatic compounds having up to 20 carbon atoms, ethylenically unsaturated nitriles, vinyl halides, and aliphatic hydrocarbons having 2 to 8 carbon atoms and 1 or 2 double bonds,
IIIb) from 0 to 20% by weight of a carboxylic acid having one olefinic double bond, and
IIIc) from 0 to 20% by weight of free-radically polymerizable monomers different than (IIIa) and (IIIb).

10. An article adhesively bonded or coated with a mixture as claimed in any of claims 6 to 8, or a textile impregnated with said mixture.

## Revendications

1. Composés de la formule générale III :
R¹-CO-NH-X-N=C=N-X-[-N=C=N-X-]ₙ-NH-CO-R²
dans laquelle
X représente un radical d'hydrocarbure aliphatique comportant 4 à 12 atomes de carbone, un radical d'hydrocarbure cycloaliphatique comportant 6 à 15 atomes de carbone ou un radical d'hydrocarbure araliphatique comportant 7 à 15 atomes de carbone,
n est un nombre entier de 0 à 10, et
R¹, R² sont des radicaux dérivés d'acides aminocarboxyliques ou de sels d'acides aminocarboxyliques (composant b)) qui se déduisent par abstraction d'un atome d'hydrogène fixé sur un groupe amino.

2. Composés suivant la revendication 1, contenant 200 à 2000 mmoles/kg de groupes carboxyle ou carboxylate, par rapport au poids des composés.

3. Composés suivant la revendication 1 ou 2, **caractérisés en ce qu'**ils contiennent d'autres composés qui portent des groupes qui peuvent réagir avec des groupes isocyanate dans une réaction d'addition (composant c)).

4. Composés suivant l'une des revendications 1 à 3, **caractérisés en ce qu'**ils contiennent d'autres isocyanates (composant d)).

5. Composés suivant la revendication 3, dans lesquels, pour ce qui concerne le composant (c), il s'agit de composés aromatiques, aliphatiques ou araliphatiques, portant éventuellement des groupes oxyde de polyalkylène, ces composés comportant 1 à 20 atomes de carbone (dans le nombre cité des atomes de carbone ceux des groupes oxyde de polyalkylène n'étant pas comptés), et au moins un groupe fonctionnel, choisi parmi le groupe du groupe amino secondaire, du groupe amino primaire ou du groupe hydroxyle alcoolique.

6. Mélanges d'un composé (III) suivant l'une des revendications 1 à 5 et d'une dispersion aqueuse contenant un polymère (P).

7. Mélanges suivant la revendication 6, dans lesquels le polymère (P) porte des groupes carboxyle.

8. Mélanges suivant la revendication 6, dans lesquels, en ce qui concerne le polymère (P), il s'agit d'un polyuréthanne (PII), constitué
IIa) de diisocyanates comportant 4 à 30 atomes de C,
IIb) de diols, dont
IIb1) 10 à 100 moles %, par rapport à la quantité totale des diols (IIb), présentent un poids moléculaire de 500 à 5000, et
IIb2) 0 à 90 moles %, par rapport à la quantité totale des diols (IIb), présentent un poids moléculaire de 60 à 500 g/mole,
IIc) de monomères différents des monomères (IIa) et (IIb) qui comportent au moins un groupe isocyanate ou au moins un groupe réactif vis-à-vis des groupes isocyanate et portent, en outre, au moins un groupe hydrophile ou un groupe potentiellement hydrophile, par lequel la capacité de dispersion dans l'eau des polyuréthannes est produite,
IId) éventuellement d'autres composés polyvalents différents des monomères (IIa) à (IIc), comportant des groupes réactifs pour lesquels il s'agit de groupes hydroxyle alcooliques, de groupes amino primaires ou secondaires ou de groupes isocyanate, et
IIe) éventuellement de composés monovalents différents des monomères (IIa) à (IId), comportant un groupe réactif pour lequel il s'agit d'un groupe hydroxyle alcoolique, d'un groupe amino primaire ou secondaire ou d'un groupe isocyanate.

9. Mélanges suivant la revendication 6, dans lesquels, en ce qui concerne le polymère (P), il s'agit d'un polymère (PIII), constitué
IIIa) de 30 à 99,9% en poids de monomères principaux choisis parmi des (méth)acrylates d'alkyle en C₁-C₂₀, des esters vinyliques d'acides carboxyliques contenant jusqu'à 20 atomes de C, des substances vinyl-aromatiques comportant jusqu'à 20 atomes de C, des nitriles éthyléniquement insaturés, des halogénures de vinyle et des hydrocarbures aliphatiques comportant 2 à 8 atomes de C et une ou deux doubles liaisons,
IIIb) de 0 à 20% en poids d'un acide carboxylique comportant une double liaison oléfinique, et
IIIc) de 0 à 20% en poids de monomères polymérisables par voie radicalaire, différents de (IIIa) et de (IIIb).

10. Objets, qui sont collés ou enduits par un mélange suivant les revendications 6 à 8, ainsi que matières textiles qui sont imprégnées de ce mélange.
